(19) **Europäisches Patentamt / European Patent Office / Office européen des brevets**

(11) **EP 4 726 809 A1**

(12) **EUROPEAN PATENT APPLICATION**
published in accordance with Art. 153(4) EPC

(43) Date of publication:
**15.04.2026 Bulletin 2026/16**

(21) Application number: **24929194.9**

(22) Date of filing: **12.10.2024**

(51) International Patent Classification (IPC):
**H01M 4/38** (2006.01)        **H01M 4/36** (2006.01)

(52) Cooperative Patent Classification (CPC):
**Y02E 60/10**

(86) International application number:
**PCT/CN2024/124537**

(87) International publication number:
**WO 2025/189745 (18.09.2025 Gazette 2025/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.03.2024   CN 202410297451**

(71) Applicant: **BTR New Material Group Co., Ltd.**
**Shenzhen, Guangdong 518106 (CN)**

(72) Inventors:
• **LIU, Zhangkun**
**Shenzhen, Guangdong 518106 (CN)**
• **HE, Peng**
**Shenzhen, Guangdong 518106 (CN)**
• **XIAO, Chengmao**
**Shenzhen, Guangdong 518106 (CN)**
• **REN, Jianguo**
**Shenzhen, Guangdong 518106 (CN)**
• **HE, Xueqin**
**Shenzhen, Guangdong 518106 (CN)**

(74) Representative: **Novagraaf Technologies**
**2 rue Sarah Bernhardt**
**CS90017**
**92665 Asnières-sur-Seine Cedex (FR)**

(54) **NEGATIVE ELECTRODE MATERIAL AND BATTERY**

(57)    Provided is an anode material and a battery. The anode material contains a carbon matrix and an active substance, and the carbon matrix contains oxygen element and nitrogen element; and a mass content of the oxygen element in the anode material is A%, a mass content of the nitrogen element in the anode material is B%, powder conductivity of the anode material is P S/cm, and A, B, and P meet the following relationship:

$M = \frac{\sqrt{AB}}{P}$, M≤5. In the anode material provided in the present application, the relationship of the nitrogen content, the oxygen content, and the powder conductivity meet $M = \frac{\sqrt{AB}}{P}$, M≤5, such that the initial coulombic efficiency of the anode material is improved while the powder conductivity of the anode material is improved.

Fig. 3

P orbit
Lone pair electron
π bond

## Description

### Cross-Reference to Related Application

This application claims priority to Chinese Patent Application No. 202410297451.X filed on March 15, 2024 and entitled "Anode Material and Preparation Method Thereof, and Battery".

### Technical Field

The present disclosure relates to the technical field of anode materials, and in particular, to a anode material and a battery.

### Background

Anode materials are one of the key materials for lithium-ion batteries to achieve high capacities and long cycles, while traditional graphite anode materials tend to have a low capacity, silicon-based anode materials are gradually popular in the world thanks to the high capacity advantage of silicon. However, silicon anodes produce more than 300% volume expansion during lithium ion intercalation. Meanwhile, the poor conductivity of the silicon produces high internal resistance, which seriously hinders further expansion of its applications.

A porous carbon material has rich pore structures, which can provide a large amount of embedding space for a nano-silicon material, inhibits a swelling effect of the silicon anode material, and alleviate its pulverization problem. Meanwhile, a carbon skeleton of porous carbon has good electronic conductivity, can provide a developed conductive network for the silicon anode material, improves the conductivity of the silicon anode material, and improves the initial coulombic efficiency of the silicon anode material. Therefore, the field of anode materials has set off a boom in the development of silicon carbon anodes. However, the developed silicon carbon anodes tend to have some oxygen and nitrogen impurities. These oxygen and nitrogen impurities may have a significant impact on the performance of silicon carbon anode materials, and there is an extreme paucity of research on this impact.

### Summary

The present disclosure provides an anode material and a battery. A nitrogen content, oxygen content, and powder conductivity of the anode material meet $M = \frac{\sqrt{AB}}{P}$, M≤5, such that the anode material has high initial coulombic efficiency and an excellent cycle capacity retention rate.

In a first aspect, the present disclosure provides an anode material. The anode material includes a carbon matrix and an active substance. The anode material contains oxygen element and nitrogen element.

A mass content of the oxygen element in the anode material is A%, a mass content of the nitrogen element in the anode material is B%, powder conductivity of the anode material is P S/cm, and A, B, and P meet the following relationship:

$$M = \frac{\sqrt{AB}}{P}, \text{M≤5.}$$

In some embodiments, the mass content of the oxygen element in the anode material is 0.2%-2%.

In some embodiments, the mass content of the nitrogen element in the anode material is 0.2%-2%.

In some embodiments, the powder conductivity of the anode material is 0.3 S/cm-10 S/cm.

In some embodiments, a volume median particle size $D_{50}$ of the anode material is 8 μm-20 μm.

In some embodiments, a specific surface area of the anode material is ≤100 $m^2$/g.

In some embodiments, a compaction density of the anode material is 0.8 $g/cm^3$-1.2 $g/cm^3$.

In some embodiments, a total pore volume of the anode material is 0.001 $cm^3$/g-0.1 $cm^3$/g.

In some embodiments, a mass content of carbon element in the anode material is 40%-60%.

In some embodiments, a mass content of silicon element in the anode material is 35%-55%.

In some embodiments, an average pore diameter of the pores of the anode material is 0.5 nm-20 nm.

In some embodiments, the carbon matrix includes at least one of amorphous carbon, graphitized carbon, mesocarbon microbeads, and carbon gel.

In some embodiments, the carbon matrix includes at least one of the amorphous carbon, the graphitized carbon, the mesocarbon microbeads, and the carbon gel, where the amorphous carbon includes at least one of hard carbon, soft carbon, and activated carbon.

In some embodiments, the carbon matrix includes at least one of the amorphous carbon, the graphitized carbon, the mesocarbon microbeads, and the carbon gel, where the graphitized carbon includes at least one of graphite and graphitized carbon nanotube.

In some embodiments, the carbon matrix has pores, and the active substance is at least partially distributed in the pores of the carbon matrix.

In some embodiments, the carbon matrix has pores, the pores include micropores, and a volume proportion of the micropores in all the pores is ≥80%.

In some embodiments, the carbon matrix has pores, a volume proportion of the pores with a pore diameter within a range of 2 nm-5 nm in all the pores is 0%-10%.

In some embodiments, the carbon matrix has pores, and a total pore volume of the carbon matrix is 0.2 $cm^3$/g-2 $cm^3$/g.

In some embodiments, the active substance includes a silicon-based active substance, and the silicon-based active substance includes at least one of crystalline silicon, amorphous silicon, and composite particles of crystal and amorphous silicon.

In some embodiments, the active substance includes a silicon-based active substance, and the active substance further includes at least one of Sn, P, S, Ge, and Pb.

In some embodiments, a shape of the active substance includes at least one of a dot shape, a spherical shape, an ellipsoidal shape, and a flaky shape.

In some embodiments, a surface of the anode material has a coating layer, and a material of the coating layer includes at least one of a metal oxide, a carbon material, a conducting polymer, a fluoride, a phosphate, and a nitride.

In some embodiments, the metal oxide comprises at least one of oxides of Sn, Ge, Fe, Si, Cu, Ti, Na, Mg, Al, Ca, and Zn.

In some embodiments, the conductive polymer includes at least one of polyaniline, polyacetylene, polypyrrole, polythiophene, poly(3-hexylthiophene), poly-phenylenevinylene, polypyridine, and polyphenylene vinylene.

In some embodiments, the fluoride includes at least one of polyvinyl fluoride, fluoropolymer, sodium fluoride, potassium fluoride, fluorocarbon polymer, fluorosilicone polymer, hexafluorobutyl acrylate, poly(tetrafluoroethylene), fluorinated ethylene propylene copolymer, perfluoroalkoxy resin, polychlorotrifluoroethylene, ethylene chlorotrifluoroethylene copolymer, polyvinylidene fluoride, and polyvinyl fluoride.

In some embodiments, the phosphate includes at least one of magnesium phosphate, calcium phosphate, aluminum phosphate, titanium phosphate, chromium phosphate, cobalt phosphate, nickel phosphate, germanium phosphate, zirconium phosphate, niobium phosphate, molybdenum phosphate, tantalum phosphate, tungsten phosphate, and lanthanum phosphate.

In some embodiments, the nitride includes at least one of titanium nitride, vanadium nitride, cobalt nitride, nickel nitride, and carbon nitride.

In some embodiments, the carbon material includes at least one of amorphous carbon and graphitized carbon.

In some embodiments, a thickness of the coating layer is 1 nm-300 nm.

In some embodiments, a mass proportion of the coating layer in the anode material is ≤10%.

In a second aspect, the present disclosure provides a battery. The battery includes any one of the anode materials of the first aspect.

By using the above technical solutions, the present disclosure has at least the following beneficial effects.

The anode material provided in the present disclosure contains the carbon matrix and the active substance, and the carbon matrix contains the oxygen element and the nitrogen element. The applicant has found through extensive tests that, by controlling the relationship of the mass content A% of the oxygen element, the mass content B% of the nitrogen element, and the powder conductivity P of the anode material to meet M = , M≤5, it ensures that the anode material possesses both high initial coulombic efficiency and excellent cycle capacity retention rate.

Lone pair electrons on p orbits of nitrogen atoms and oxygen atoms in the anode material may participate in a π-π conjugated system of the carbon matrix to form a larger p-π conjugated system, such that the number of mobile electrons in the carbon matrix is increased, thereby improving the powder conductivity of the anode material. The high powder conductivity allows the anode material to transmit lithium ions more efficiently, such that during a first charging-discharging process, more lithium ions can participate in a reversible charging-discharging reaction to reduce an irreversible capacity loss, thereby improving the initial coulombic efficiency of the anode material. The applicant has found through extensive tests that, when M > 5, the nitrogen and the oxygen are overdoped, tetrahedral structures formed by S and P electronic orbits of the nitrogen and oxygen atoms cause carbon atoms in the carbon matrix to deviate from a π-π conjugated plane, resulting to reduction in π-π conjugated carbon atoms, and groups such as C-O-O-C, C-N-N-C, etc. formed by the nitrogen, the oxygen, and the carbon atoms split the π-π conjugated system, thereby further reducing the electronic conductivity of the anode material. The reduction of the conductivity of the anode material causes the battery to form more solid electrolytes during a cycling process, resulting in irreversible consumption of active lithium ions, that is, the number of the lithium ions that can participate in deintercalation is reduced, thus leading to reduction in the initial coulombic efficiency of the battery. Therefore, in the present disclosure, when the relationship of the mass content A% of the oxygen element, the mass content B% of the nitrogen element, and the powder conductivity P of the anode material is controlled to meet the above relationship, the impact of nitrogen and oxygen doping on the initial coulombic efficiency of the anode material can be reduced, thus ensuring that the anode material possesses both high initial coulombic efficiency and excellent cycle capacity retention rate.

**Brief Description of the Drawings**

Fig. 1 is a schematic diagram of the structure of a $\pi$-$\pi$ conjugated system of a carbon matrix of an anode material of an example of the present disclosure.

Fig. 2 is a schematic diagram of the structure of a p-$\pi$ conjugated system of a carbon matrix of an anode material of an example of the present disclosure.

Fig. 3 is a schematic diagram of the structure of a p-$\pi$ conjugated system of a carbon matrix of an anode material when nitrogen and oxygen element are overdoped of an example of the present disclosure.

Fig. 4 is a flow diagram of a method for preparing an anode material of an example of the present disclosure.

**Detailed Description of the Embodiments**

The following descriptions are merely preferred embodiments of the examples of the present disclosure, and it should be noted that those of ordinary skill in the art may also make several improvements and refinements without departing from the principle of the examples of the present disclosure, and it is also considered that these improvements and refinements fall within the protection scope of the examples of the present disclosure.

In a first aspect, the present disclosure provides an anode material. The anode material includes a carbon matrix and an active substance. The anode material further contains oxygen element and nitrogen element.

A mass content of the oxygen element in the anode material is A%, a mass content of the nitrogen element in the anode material is B%, powder conductivity of the anode material is P S/cm, and A, B, and P meet the following relationship:

$$M = \frac{\sqrt{AB}}{P}, M \leq 5.$$

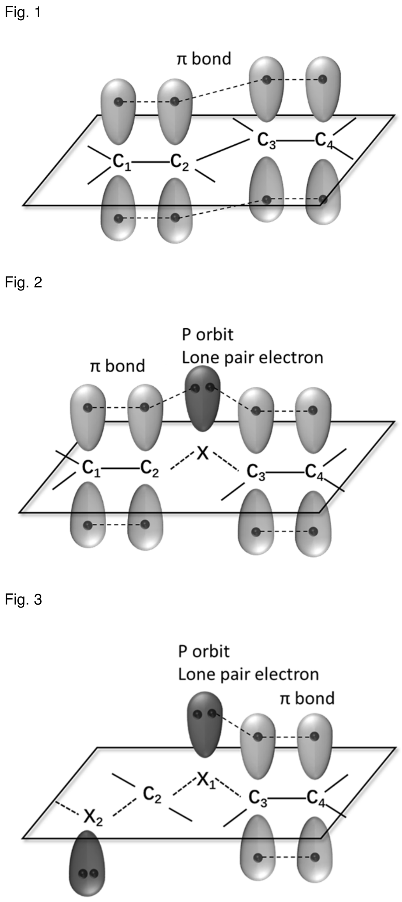

In the above solution, the anode material includes the carbon matrix and the active substance, and the anode material contains the oxygen element and the nitrogen element. As shown in Fig. 1 and Fig. 2, lone pair electrons on p orbits of nitrogen atoms and oxygen atoms can participate in a $\pi$-$\pi$ conjugated system of the carbon matrix to form a larger p-$\pi$ conjugated system, such that the number of mobile electrons in the carbon matrix is increased, thereby improving the powder conductivity of the anode material. The high powder conductivity allows the anode material to transmit lithium ions more efficiently, such that during a first charging-discharging process, more lithium ions can participate in a reversible charging-discharging reaction to reduce an irreversible capacity loss, thereby improving the initial coulombic efficiency of a battery prepared by the anode material. Furthermore, in the present disclosure, the relationship of the mass content A% of the oxygen element, the mass content B% of the nitrogen element, and the powder conductivity P of the anode material is controlled to meet $M = \frac{\sqrt{AB}}{P}, M \leq 5$. The applicant has found through extensive tests that, when M > 5, as shown in Fig. 3, the nitrogen and the oxygen are overdoped, tetrahedral structures formed by S and P electronic orbits of the nitrogen and oxygen atoms cause carbon atoms in the carbon matrix to deviate from a $\pi$-$\pi$ conjugated plane, resulting to reduction in $\pi$-$\pi$ conjugated carbon atoms, and groups such as C-O-O-C, C-N-N-C, etc. formed by the nitrogen, the oxygen and the carbon atoms split the $\pi$-$\pi$ conjugated system, thereby further reducing the electronic conductivity of the anode material. The reduction of the conductivity of the anode material causes the battery prepared by the anode material to form more solid electrolytes during a cycling process, resulting in irreversible consumption of active lithium ions, that is, the number of the lithium ions that can participate in deintercalation is reduced, thus leading to reduction in the initial coulombic efficiency of the battery prepared by the anode material. Therefore, in the present disclosure, when the relationship of the mass content A% of the oxygen element, the mass content B% of the nitrogen element, and the powder conductivity P of the anode material is controlled to meet the above relationship, the impact of nitrogen and oxygen doping on the initial coulombic efficiency of the anode material can be reduced, thus the anode material possesses both high initial coulombic efficiency and excellent cycle capacity retention rate.

In some embodiments, the mass content of the oxygen element is 0.2%-2%, that is, an A value is 0.2-2. Optionally, the mass content of the oxygen element may specifically be 0.2%, 0.4%, 0.6%, 0.8%, 1%, 1.2%, 1.4%, 1.6%, 1.8%, 2%, or the like, or may be other values within the range, it can be selected according to actual requirements, and is not limited herein. It can be understood that, the mass content A% of the oxygen element is within the above range, the powder conductivity of the carbon matrix may be improved. An existence form of the oxygen element may be at least one of O-C, O-Si, and O-H.

In some embodiments, the mass content of the nitrogen element is 0.2%-2%, that is, a B value is 0.2-2. Optionally, the mass content of the nitrogen element may specifically be 0.2%, 0.4%, 0.6%, 0.8%, 1%, 1.2%, 1.4%, 1.6%, 1.8%, 2%, or the like, or may be other values within the range, it can be selected according to actual requirements, and is not limited herein. It can be understood that, the mass content B% of the nitrogen element is within the above range, such that the splitting of the $\pi$-$\pi$ conjugated system of the carbon matrix caused by nitrogen doping is reduced while the powder conductivity of the carbon matrix is improved. An existence form of the nitrogen element may be at least one of Si-N, C-N, and N-H.

In some embodiments, a proper amount of a sample is taken, pressed, and then pasted on a sample tray; the sample is put in a sample room of Thermo Scientific K-Alpha XPS instrument; when a pressure of the sample room is better than 5x10-7 mbar, the sample is sent to an analysis room, a light spot size is 400 $\mu$m, a working voltage is 12 kV, and a filament current is 6 mA; full spectrum scanning energy is 150 eV, and a step size is 1 eV; narrow spectrum scanning energy is 50 eV, and a step size is 0.1 eV; and an X-ray energy spectrum of the sample is obtained through scanning, and correction and peak-splitting simulation are performed on the energy spectrum to obtain corresponding chemical bond information.

In some embodiments, the powder conductivity of the anode material is 0.3 S/cm-10 S/cm, that is, a P value is 0.3-10. Optionally, the powder conductivity of the anode material may specifically be 0.3 S/cm, 2 S/cm, 4 S/cm, 6 S/cm, 8 S/cm, 10 S/cm, or the like, or may be other values within the range, it can be selected according to actual requirements, and is not limited herein. It can be understood that, the powder conductivity P of the anode material is within the range, such that the anode material may transmit lithium ions more efficiently, and during first charging-discharging of the battery prepared by the anode material, more lithium ions can participate in a reversible charging-discharging reaction of the battery prepared by the anode material, so as to reduce irreversible capacity losses of the battery, thereby improving the initial coulombic efficiency of the anode material.

In some embodiments, a volume median particle size $D_{50}$ of the anode material is 8 $\mu$m-20 $\mu$m, and may specifically be 8 $\mu$m, 9 $\mu$m, 10 $\mu$m, 11 $\mu$m, 12 $\mu$m, 13 $\mu$m, 14 $\mu$m, 15 $\mu$m, 16 $\mu$m, 17 $\mu$m, 18 $\mu$m, 19 $\mu$m, 20 $\mu$m, or the like, or may definitely be other values within the above range, and is not limited herein. The particle size of the anode material is within the above range, and a diffusion path of lithium ions is short, such that the time for the intercalation and deintercalation of lithium ions may be ensured, and the anode material can reach to a state of rapid and full lithium ions intercalation, thereby ensuring the charging-discharging performance of the battery.

In some embodiments, the specific surface area of the anode material is $\leq$100 m$^2$/g, and may specifically be 100 m$^2$/g, 90 m$^2$/g, 80 m$^2$/g, 70 m$^2$/g, 60 m$^2$/g, 50 m$^2$/g, 40 m$^2$/g, 30 m$^2$/g, 20 m$^2$/g, 10 m$^2$/g, or the like, or may definitely be other values within the above range, and is not limited herein. It can be understood that, the specific surface area of the anode material affects a contact area between the anode material and the electrolyte solution. The specific surface area of the anode material is within the above range, such that the amount of lithium ions consumed by the SEI membrane formed during the first charging-discharging of the battery can be reduced, thereby reducing an irreversible capacity loss of the battery.

In some embodiments, the compaction density of the anode material is 0.8 g/cm$^3$-1.2 g/cm$^3$, and may specifically be 0.8 g/cm$^3$, 0.9 g/cm$^3$, 1.0 g/cm$^3$, 1.1 g/cm$^3$, 1.2 g/cm$^3$, or the like, or may definitely be other values within the above range, and is not limited herein.

In some embodiments, the carbon matrix of the anode material includes at least one of amorphous carbon, graphitized carbon, mesocarbon microbeads, and carbon gel. The amorphous carbon includes at least one of hard carbon, soft carbon, and activated carbon, mesocarbon microbeads, or carbon gel; the graphitized carbon includes at least one of graphite and graphitized carbon nanotubes; and the type of the carbon matrix may be selected according to actual requirements, and is not limited herein. It can be understood that, the carbon matrix can serve as a supporting skeleton by selecting the above materials, and also has good electrical conductivity, thereby ensuring the powder conductivity of the anode material.

In some embodiments, the pores of the carbon matrix include micropores. It can be understood that, the pores of the carbon matrix can provide an intercalation space and a swelling space for nano silicon, thereby relieving a swelling effect of the above anode material.

In some embodiments, the pores of the carbon matrix include the micropores, and a volume proportion of the micropores in all the pores is $\geq$80%. Specifically, the volume proportion of the micropores in all the pores may be 80%, 81%, 82%, 83%, 84%, 85%, 87%, 88%, 90%, 92%, 93%, 95%, 98%, 99%, or the like, which is not limited herein.

In some embodiments, a volume proportion of the pores with a pore diameter within a range of 2 nm-5 nm of the pores in the carbon matrix in all the pores is may specifically be 0%, 2%, 3%, 4%, 5%, 6%, 7%, 8%, 9%, 10%, or the like, and is not limited herein. It can be understood that, the pores of the carbon matrix are predominantly micropores. Pore diameter distribution within the range facilitates the deposition of a silicon material in a deposition process, thereby improving the compactness of the anode material. In some examples, in the case of a silicon material as the active substance, while stirring, 150 mL of an HF acid solution with a mass fraction of 20% is dropwise added to 10 g of the anode material to generate $SiF_4$ and $H_2$ gas and release heat, until there was no gas generated, the supernatant acid solution is removed through centrifugation, then 150 mL of the HF acid solution with the mass fraction of 20% was added to the anode material again, stirring was performed for 12 h, then the supernatant acid solution was removed again through centrifugation, and then the anode material was washed with pure water to neutral and dried, so as to obtain the anode material with the silicon material removed, that is, the carbon matrix.

In some embodiments, the pores of the anode material include micropores, and a volume proportion of the micropores in all the pores is ≤5%.

In some embodiments, the pores of the anode material include mesopores, and a volume proportion of the mesopores in all the pores is 87%-97%.

In some embodiments, the pores of the anode material include macropores, and a volume proportion of the macropores in all the pores is ≤13%. It can be understood that, since the active substance such as silicon particles fill a large number of pores of the carbon material, especially the micropores, the pores of the anode material are predominantly the mesopores and the macropores.

In some embodiments, a total pore volume of the anode material is 0.001 cm³/g-0.1 cm³/g. The total pore volume of the anode material may specifically by 0.001 cm³/g, 0.002 cm³/g, 0.005 cm³/g, 0.008 cm³/g, 0.01 cm³/g, 0.02 cm³/g, 0.03 cm³/g, 0.04 cm³/g, 0.05 cm³/g, 0.06 cm³/g, 0.07 cm³/g, 0.08 cm³/g, 0.09 cm³/g, 0.1 cm³/g, or the like, and may definitely be other values within the above range, which is not limited herein.

In some embodiments, a total pore volume of the carbon matrix is 0.2 cm³/g-2 cm³/g. The total pore volume of the carbon matrix may specifically be 0.2 cm³/g, 0.3 cm³/g, 0.4 cm³/g, 0.5 cm³/g, 0.6 cm³/g, 0.9 cm³/g, 1.0 cm³/g, 1.2 cm³/g, 1.5 cm³/g, 1.8 cm³/g, 1.9 cm³/g, 1.95 cm³/g, 2 cm³/g, or the like, or may definitely be other values within the above range, and is not limited herein. Compared to the anode material with the active substance such as the silicon particles removed, the pore volume of the anode material containing the active substance such as the silicon particles is significantly reduced, indicating that the compactness of the anode material is increased, such that the specific capacity of the anode material can be effectively increased. In the present disclosure, by controlling the total pore volumes of the anode material filled with the active substance such as the silicon particles and the anode material with the active substance such as the silicon particles removed within the above range, the specific capacity of the anode material can be increased, and it may also ensure that the anode material can reserve appropriate pores to relieve the volume expansion of the active substance such as the silicon particles in a lithium ions intercalation and deintercalation process, thereby improving the cycling performance of the anode material.

In some embodiments, an average pore diameter of the pores of the anode material is 0.5 nm-20 nm. Specifically, the average pore diameter of the pores of the anode material may be 0.5 nm, 0.8 nm, 1.0 nm, 1.3 nm, 1.5 nm, 1.8 nm, 2.0 nm, 3.0 nm, 4.0 nm, 5.0 nm, 6.0 nm, 7.0 nm, 10 nm, 12 nm, 15 nm, 18 nm, 20 nm, or the like, which is not limited herein. The average pore diameter of the pores of the anode material is controlled, such that while the rate performance of the anode material is improved, the volume expansion of the active substance is buffered, and the structure stability of the anode material is improved.

In some embodiments, a mass content of carbon element in the anode material is 40%-60%, and may specifically be 40%, 42%, 43%, 45%, 48%, 50%, 52%, 55%, 57%, 59%, 60%, or the like, which is not limited herein.

In some embodiments, a mass content of silicon element in the anode material is 35%-55%, and may specifically be 35%, 38%, 40%, 43%, 45%, 48%, 50%, 52%, 55%, or the like, which is not limited herein.

In some embodiments, the active substance includes a silicon-based active substance, and the silicon-based active substance includes at least one of crystalline silicon, amorphous silicon, composite particles of crystal and amorphous silicon. The type of the active substance may be selected according to actual requirements, and is not limited herein. It can be understood that, the active substance is the silicon particles, an alloying mechanism of silicon causes the active substance to have the advantage of high capacity, and accordingly, the prepared anode material have a higher capacity.

In some embodiments, the active substance further includes at least one of Sn, P, S, Ge, and Pb. The type of the active substance may be selected according to actual requirements, and is not limited herein.

In some embodiments, the morphology of the active substance includes at least one of a dot shape, a spherical shape, an ellipsoidal shape, and a flaky shape. The morphology of the active substance may be selected according to actual requirements, and is not limited herein.

In some embodiments, a surface of the anode material has a coating layer, and a material of the coating layer includes at least one of a metal oxide, a carbon material, amorphous silicon, a conducting polymer, a fluoride, a phosphate, and a nitride. It can be understood that, the coating layer located at the outermost layer of the anode material has good conductivity, such that electrical contact performance between the active substance and a current collector may be significantly improved, and a transmission speed of electrons is accelerated, thereby improving the charging-discharging performance of the battery. Meanwhile, the coating layer may reduce a direct contact between the active substance and the electrolyte solution, and the occurrence of side reactions between the anode material and the electrolyte solution is reduced, thereby improving the initial coulombic efficiency and cycling stability of the battery prepared by the anode material.

In some embodiments, the metal oxide comprises at least one of oxides of Sn, Ge, Fe, Si, Cu, Ti, Na, Mg, Al, Ca, and Zn.

In some embodiments, the carbon material includes at least one of amorphous carbon and graphitized carbon.

In some embodiments, the conductive polymer includes at least one of polyaniline, polyacetylene, polypyrrole, polythiophene, poly(3-hexylthiophene), poly-phenylenevinylene, polypyridine, and polyphenylene vinylene.

In some embodiments, the fluoride includes at least one of vinyl fluoride, fluoropolymer, lithium fluoride, sodium fluoride, potassium fluoride, fluorocarbon polymer, fluorosilicone polymer, hexafluorobutyl acrylate, poly(tetrafluoroethylene) (PTFE), fluorinated ethylene propylene copolymer (FEP), perfluoroalkoxy resin (PFA), polychlorotrifluoroethylene (PCTFE), ethylene chlorotrifluoroethylene copolymer (ECTFE), polyvinylidene fluoride (PVDF), and polyvinyl fluoride.

In some embodiments, the phosphate includes at least one of magnesium phosphate, calcium phosphate, aluminum phosphate, titanium phosphate, chromium phosphate, cobalt phosphate, nickel phosphate, germanium phosphate, zirconium phosphate, niobium phosphate, molybdenum phosphate, tantalum phosphate, tungsten phosphate, and lanthanum phosphate.

In some embodiments, the nitride includes at least one of titanium nitride, vanadium nitride, cobalt nitride, nickel nitride, and carbon nitride.

During a practical application process, a material of the coating layer may be selected according to actual requirements, and is not limited herein. The coating layer may be a single coating layer formed by the above single material, or may also be a coating layer formed by combining the above various materials, or may also be a multilayer coating layers formed by the single material, or may also be the multilayer coating layers formed by the various materials. Exemplarily, it can be coated with a carbon coating layer, and then coated with a polymer coating layer, or it can be coated with a carbon coating layer, and then coated with a macromolecule coating layer, or it can be coated with a polymer coating layer, and then coated with a oxide coating layer, etc. A layer structure of the coating layer may be selected according to actual requirements, and is not limited herein. It can be understood that, when the coating layer is of a multi-layer coating structure, the compactness is higher.

In some embodiments, a thickness of the coating layer is 1 nm-300 nm. A mass proportion of the coating layer in the anode material is ≤10%. Optionally, the thickness of the coating layer may specifically be 1 nm, 50 nm, 150 nm, 200 nm, 250 nm, and 300 nm, or the like. The mass proportion of the coating layer in the anode material may specifically be 10%, 9%, 8%, 7%, 6%, 5%, 4%, 3%, 2%, 1%, or the like, or may be other values within the range, it can be selected according to actual requirements, and is not limited herein. It can be understood that, the coating layer with the above thickness and mass proportion has good conductivity, such that electrical contact performance between the active substance and a current collector may be significantly improved, and a transmission speed of electrons is accelerated, thereby improving the charging and discharging of the battery. Meanwhile, the coating layer may reduce the direct contact between the active substance and the electrolyte solution, and the occurrence of side reactions is reduced, thereby improving the initial coulombic efficiency and cycling stability of the battery. Preferably, the thickness of the coating layer is 1 nm-50 nm, and more preferably, the thickness of the coating layer is 1 nm-30 nm.

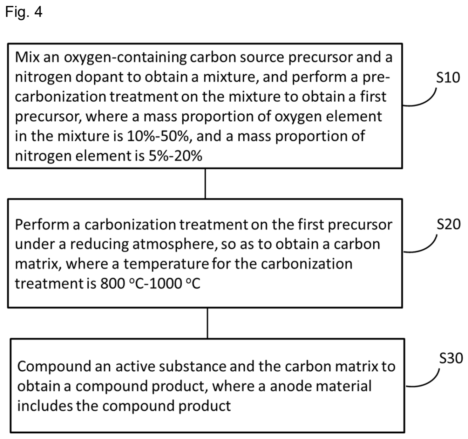

In a second aspect, the present disclosure provides a method for preparing an anode material. Referring to Fig. 4, the preparation method includes the following steps.

At S10, an oxygen-containing carbon source precursor and a nitrogen dopant are mixed to obtain a mixture, and a pre-carbonization treatment is performed on the mixture to obtain a first precursor, where a mass proportion of oxygen element in the mixture is ≤50%, and a mass proportion of nitrogen element is ≤20%.

At S20, a carbonization treatment is performed on the first precursor under a reducing atmosphere, so as to obtain a carbon matrix, where a temperature for the carbonization treatment is 800 °C-1000 °C.

At S30, an active substance and the carbon matrix are compounded to obtain a compound product, where an anode material includes the compound product.

In the above solution, according to the method for preparing an anode material provided in the present disclosure, during the preparation of the first precursor, by using the oxygen and the nitrogen dopants and controlling the mass contents of them to provide the oxygen element and the nitrogen element, the anode material prepared is doped with the nitrogen element and the oxygen element, after the nitrogen element and the oxygen element are doped in the anode material, lone pair electrons on p orbits of nitrogen atoms and oxygen atoms can increase the number of mobile electrons in the carbon matrix, such that the powder conductivity of the anode material is improved, the high powder conductivity allows the anode material to transmit lithium ions more efficiently, during a first charging-discharging process of the battery prepared by the anode material, more lithium ions can participate in a reversible charging-discharging reaction to reduce an irreversible capacity loss of the battery, thereby improving the initial coulombic efficiency of the battery prepared by the anode material. Meanwhile, the contents of the nitrogen element and the oxygen element in the anode material are adjusted within an appropriate range through the carbonization treatment, such that an impact of nitrogen and oxygen doping on the initial coulombic efficiency of the anode material is reduced while the powder conductivity of the anode material is improved, thereby obtaining the anode material of the present disclosure with both excellent conductive performance and high initial coulombic efficiency.

The preparation method of the present application will be specifically introduced in combination with the following examples.

At S10, an oxygen-containing carbon source precursor and a nitrogen dopant are mixed to obtain a mixture, and a pre-carbonization treatment is performed on the mixture to obtain a first precursor, where a mass proportion of oxygen element in the mixture is ≤50%, and a mass proportion of nitrogen element is ≤20%. It can be understood that, the mixing of the oxygen-containing carbon source precursor and the nitrogen dopant is performed in air, and adsorbs oxygen and moisture in air.

In some embodiments, the mass proportion of the oxygen in the mixture is ≤50%. Optionally, the mass proportion of the oxygen element in the mixture may specifically be 10%, 20%, 30%, 40%, 50%, or the like, or may be other values within the range, it can be selected according to actual requirements, and is not limited herein. It can be understood that, the mass proportion of the oxygen in the mixture is within the above range, a doping amount of the oxygen element in the carbon matrix obtained after the pre-carbonization treatment is within an appropriate range, such that the powder conductivity of the carbon matrix may be improved. Preferably, the mass proportion of the oxygen element in the mixture is 10%-50%.

In some embodiments, the mass proportion of the nitrogen element in the mixture is ≤20%. Optionally, the mass proportion of the nitrogen element in the mixture may specifically be 5%, 8%, 11%, 15%, 20%, or the like, or may be other values within the range, it can be selected according to actual requirements, and is not limited herein. It can be understood that, the mass proportion of the nitrogen element in the mixture is within the above range, a doping amount of the nitrogen element in the carbon matrix obtained after the pre-carbonization treatment is within an appropriate range, such that the splitting of a $\pi$-$\pi$ conjugated system of the carbon matrix caused by nitrogen doping is reduced while the powder conductivity of the carbon matrix is improved. Preferably, the mass proportion of the nitrogen element in the mixture is 5%-20%.

In some embodiments, the oxygen-containing carbon source precursor includes at least one of epoxy resin, phenolic resin, ion exchange resin, corn starch, soluble starch, sweet potato starch, cellulose, and lignin. The type of the oxygen-containing carbon source precursor can be selected according to actual requirements, and is not limited herein.

In some embodiments, the nitrogen dopant includes at least one of an amino acid, a nitrobenzene derivative, and an aniline derivative. The type of the nitrogen dopant can be selected according to actual requirements, and is not limited herein.

In some embodiments, a mixing time is 1 h-2 h. Optionally, the mixing time may specifically be 1 h, 1.2 h, 1.4 h, 1.6 h, 1.8 h, 2 h, or the like, or may be other values within the range, may be selected according to actual requirements, and is not limited herein. It can be understood that, the mixing time is within the above range, the mixing of the oxygen-containing carbon source precursor and the nitrogen dopant is more uniform, such that the nitrogen element and the oxygen element are uniformly distributed in the carbon material, and a doping effect of the nitrogen element and the oxygen element is improved.

In some embodiments, a temperature for the pre-carbonization treatment is 600 °C-800 °C. Optionally, the temperature for the pre-carbonization treatment may specifically be 600 °C, 620 °C, 640 °C, 660 °C, 680 °C, 700 °C, 720 °C, 740 °C, 760 °C, 780 °C, 800 °C, or the like, or may also be other values within the range, it can be selected according to actual requirements, and is not limited herein.

In some embodiments, a time for the pre-carbonization treatment is 1 h-6 h. Optionally, the time for the pre-carbonization treatment may specifically be 1 h, 2 h, 3 h, 4 h, 5 h, 6 h, or the like, or may be other values within the range, it can be selected according to actual requirements, and is not limited herein.

In some embodiments, the pre-carbonization treatment is performed under a protective atmosphere. The protective atmosphere includes at least one of nitrogen, helium, or neon, and the type of the protective atmosphere may be selected according to actual requirements, and is not limited herein.

At S20, a carbonization treatment is performed on the first precursor under a reducing atmosphere, so as to obtain a carbon matrix, where a temperature for the carbonization treatment is 800 °C-1000 °C.

In some embodiments, the carbonization treatment is performed under a reducing atmosphere. The reducing atmosphere includes at least one of hydrogen, methane, and acetylene, and the type of the reducing atmosphere can be selected according to actual requirements, and is not limited herein.

In some embodiments, a gas flow of the reducing atmosphere is 10 SCCM-200 SCCM. Optionally, the gas flow of the reducing atmosphere may specifically be 10 SCCM, 40 SCCM, 70 SCCM, 100 SCCM, 130 SCCM, 160 SCCM, 190 SCCM, 200 SCCM, or the like, or may be other values within the range, it can be selected according to actual requirements, and is not limited herein.

In some embodiments, a time for the carbonization treatment is 0.5 h-2 h. Optionally, the time for the carbonization treatment may specifically be 0.5 h, 1 h, 1.5 h, 2 h, or the like, or may be other values within the range, it can be selected according to actual requirements, and is not limited herein. It can be understood that, the time for the carbonization treatment is within the above range, the nitrogen and oxygen doping amounts in the carbon matrix obtained through the carbonization treatment are within a rational range, such that the splitting of the $\pi$-$\pi$ conjugated system is reduced while the powder conductivity of the anode material is improved, thus the anode material possesses both excellent conductive performance and high initial coulombic efficiency.

At S30, an active substance and the carbon matrix are compounded to obtain a compound product, where an anode material includes the compound product.

In some embodiments, the step of mixing the active substance and the carbon matrix includes: a silicon deposition treatment is performed on the carbon matrix by using a silicon source, so as to obtain the anode material.

In some embodiments, the silicon source includes at least one of silane and disilane, and the type of the silicon source can be selected according to actual requirements, and is not limited herein.

In some embodiments, a flow rate of the silicon source is 10 SCCM-500 SCCM. Optionally, the flow rate of the silicon source may specifically be 10 SCCM, 100 SCCM, 200 SCCM, 300 SCCM, 400 SCCM, 500 SCCM, or the like, or may be other values within the range, it can be selected according to actual requirements, and is not limited herein.

In some embodiments, the silicon source includes a carrier gas, and the carrier gas includes at least one of nitrogen, helium, and argon, and the type of the carrier gas can be selected according to actual requirements, and is not limited herein.

In some embodiments, the silicon source further includes the carrier gas, and a flow rate of the carrier gas is 50 SCCM-1000 SCCM. Optionally, the flow rate of the carrier gas may specifically be 50 SCCM, 100 SCCM, 200 SCCM, 300 SCCM, 400 SCCM, 500 SCCM, 600 SCCM, 700 SCCM, 800 SCCM, 900 SCCM, 1000 SCCM, or the like, or may be other values within the range, it can be selected according to actual requirements, and is not limited herein.

In some embodiments, a temperature for the silicon deposition treatment is 450 °C-750 °C. Optionally, the temperature for the silicon deposition treatment may specifically be 450 °C, 480 °C, 510 °C, 540 °C, 570 °C, 600 °C, 630 °C, 660 °C, 690 °C, 720 °C, 750 °C, or the like, or may also be other values within the range, it can be selected according to actual requirements, and is not limited herein.

After S30, the preparation method further includes S40, the compound product is coated by using a coating material, so as to obtain the anode material.

It can be understood that, the coating layer located at the outermost layer of the anode material has good conductivity, such that electrical contact performance between the active substance and a current collector may be significantly improved, and a transmission speed of electrons is accelerated, thereby improving the charging-discharging performance of the battery prepared by the anode material. Meanwhile, the coating layer may reduce a direct contact between the active substance and the electrolyte solution, and the occurrence of side reactions between the anode material and the electrolyte solution is reduced, thereby improving the initial coulombic efficiency and cycling stability of the battery prepared by the anode material.

In some embodiments, a material of the coating layer includes at least one of a metal oxide, a carbon material, amorphous silicon, a conducting polymer, a fluoride, a phosphate, and a nitride.

In some embodiments, the metal oxide comprises at least one of oxides of Sn, Ge, Fe, Si, Cu, Ti, Na, Mg, Al, Ca, and Zn.

In some embodiments, the carbon material includes at least one of amorphous carbon and graphitized carbon.

In some embodiments, the conductive polymer includes at least one of polyaniline, polyacetylene, polypyrrole, polythiophene, poly(3-hexylthiophene), poly-phenylenevinylene, polypyridine, and polyphenylene vinylene.

In some embodiments, the fluoride includes at least one of vinyl fluoride, fluoropolymer, lithium fluoride, sodium fluoride, potassium fluoride, fluorocarbon polymer, fluorosilicone polymer, hexafluorobutyl acrylate, poly(tetrafluoroethylene) (PTFE), fluorinated ethylene propylene copolymer (FEP), perfluoroalkoxy resin (PFA), polychlorotrifluoroethylene (PCTFE), ethylene chlorotrifluoroethylene copolymer (ECTFE), polyvinylidene fluoride (PVDF), and polyvinyl fluoride.

In some embodiments, the phosphate includes at least one of magnesium phosphate, calcium phosphate, aluminum phosphate, titanium phosphate, chromium phosphate, cobalt phosphate, nickel phosphate, germanium phosphate, zirconium phosphate, niobium phosphate, molybdenum phosphate, tantalum phosphate, tungsten phosphate, and lanthanum phosphate.

In some embodiments, the nitride includes at least one of titanium nitride, vanadium nitride, cobalt nitride, nickel nitride, and carbon nitride.

In a third aspect, the present disclosure provides a battery. The battery includes any one of the anode materials of the first aspect or an anode material prepared by the method for preparing a anode material of the second aspect. The anode material provided in the present disclosure has excellent conductive performance.

The examples of the present disclosure are further described below with a plurality of examples. The examples of the present disclosure are not limited to the following specific examples. Changes may be implemented appropriately within the scope of unchanged primary rights.

Example 1

(1) Soluble starch and aniline were mixed for 2 h to obtain a mixture, where a mass proportion of oxygen element in the mixture was 50%, and a mass proportion of nitrogen element was 5%; and a pre-carbonization treatment was performed on the mixture at 600 °C for 3 h, so as to obtain a first precursor.

(2) A carbonization treatment was performed on the first precursor for 1 h at 800 °C in 100 SCCM hydrogen atmosphere, so as to obtain a carbon matrix.

(3) The carbon matrix was placed in a furnace, 500 SCCM of nitrogen and 250 SCCM of silane were introduced, a silicon deposition treatment was performed for 5 h at 750 °C to obtain a compound product, and the compound product was coated by using a coating material to obtain an anode material.

Example 2

A difference between this example and Example 1 lied in that, the mass proportion of the oxygen element in the mixture was 25%, and the mass proportion of the nitrogen element was 10%.

Example 3

A difference between this example and Example 1 lied in that, the mass proportion of the oxygen element in the mixture was 10%, and the mass proportion of the nitrogen element was 20%.

Example 4

A difference between this example and Example 2 lied in that, the pre-carbonization treatment was performed on the mixture at 700 °C for 3 h, so as to obtain the first precursor.

Example 5

A difference between this example and Example 2 lied in that, the pre-carbonization treatment was performed on the mixture at 800 °C for 3 h, so as to obtain the first precursor.

Example 6

A difference between this example and Example 3 lied in that, the carbonization treatment was performed on the first precursor for 1 h at 900 °C in 100 SCCM hydrogen atmosphere, so as to obtain the carbon matrix.

Example 7

A difference between this example and Example 3 lied in that, the carbonization treatment was performed on the first precursor for 1 h at 1000 °C in 100 SCCM hydrogen atmosphere, so as to obtain the carbon matrix.

Example 8

A difference between this example and Example 2 lied in that, the carbonization treatment was performed on the first precursor for 1 h at 900 °C in 100 SCCM hydrogen atmosphere, so as to obtain the carbon matrix.

Example 9

A difference between this example and Example 2 lied in that, the carbonization treatment was performed on the first precursor for 1 h at 1000 °C in 100 SCCM hydrogen atmosphere, so as to obtain the carbon matrix.

Example 10

A difference between this example and Example 2 lied in that, the carbonization treatment was performed on the first precursor for 2 h at 800 °C in 100 SCCM hydrogen atmosphere, so as to obtain the carbon matrix.

Comparative example 1

A difference between this comparative example and Example 2 lied in that, the carbonization treatment was performed on the first precursor for 1 h at 400 °C in 100 SCCM hydrogen atmosphere, so as to obtain the carbon matrix.

Comparative example 2

A difference between this comparative example and Examle 1 lied in that, the mass proportion of the oxygen element in the mixture was 60%, and the mass proportion of the nitrogen element was 25%.

Table 1

| | Oxygen proportion in mixture (wt%) | Nitrogen proportion in mixture (wt%) | Pre-carbonization temperature (°C) | Pre-carbonization time (h) | Carbonization temperature (°C) | Carbonization time (h) |
|---|---|---|---|---|---|---|
| Example 1 | 50 | 5 | 600 | 3 | 800 | 1 |
| Example 2 | 25 | 10 | 600 | 3 | 800 | 1 |
| Example 3 | 10 | 20 | 600 | 3 | 800 | 1 |
| Example 4 | 25 | 10 | 700 | 3 | 800 | 1 |
| Example 5 | 25 | 10 | 800 | 3 | 800 | 1 |
| Example 6 | 10 | 20 | 600 | 3 | 900 | 1 |
| Example 7 | 10 | 20 | 600 | 3 | 1000 | 1 |
| Example 8 | 25 | 10 | 600 | 3 | 900 | 1 |
| Example 9 | 25 | 10 | 600 | 3 | 1000 | 1 |
| Example 10 | 25 | 10 | 600 | 3 | 800 | 2 |
| Comparative example 1 | 25 | 10 | 600 | 3 | 400 | 1 |
| Comparative example 2 | 60 | 25 | 600 | 3 | 800 | 1 |

Test method:

(1) Method for testing nitrogen and oxygen contents:

Reference to the national standard method: Steel and Iron-Determination of oxygen content-The pulse heating inert gas fusion-infrared absorption method GB/T 11261-2006; an oxygen nitrogen hydrogen analyzer ONH2000 from Verder, German was used, a sample was coated with a fluxing agent and fused in an inert gas, oxygen contained therein was reduced into carbon dioxide by carbon in a graphite crucible, the produced carbon dioxide entered an infrared detector with a carrier gas, quantitative statistics was performed on changes in carbon dioxide infrared signal to calculate the oxygen content, the nitrogen contained therein was cracked to form stabilized elemental nitrogen, the produced nitrogen entered a thermal conductivity detector with the carrier gas, and quantitative statistics was performed on changes in heat of a thermal conductivity cell to calculate the nitrogen content.

(2) Method for testing powder conductivity:

A Chemical powder conductivity tester MCP-PD51 from Mitsubishi Chemical, Japan was used, a method for determining sample volume resistivity using a four-probe method was used to determine the resistance of a powder under a 20 KN pressure point, and finally, the powder conductivity of the powder was calculated by using an instrument program.

(3) Test for electrochemical performance:

The anode material, superP and LA133 were mixed according to a ratio of 70:15:15, so as to obtain a slurry, and the slurry was uniformly coated on copper foil, the copper foil was dried and then prepared into an electrode plate, a button battery was assembled, and the electrochemical performance of the button battery was tested on a blue lightning battery testing cabinet M340A.

(4) Method for testing specific surface area of material:

A specific surface area was measured by using a TriStar3000 surface area and pore diameter analyzer from Micromeritics, USA.

(5) Method for testing pore volume of material:

A test was performed by using an ASAP2460 device from Micromeritics, USA, and a pore volume V was calculated within a pore diameter range of 17 Å-3000 Å by using a BJH Desorption cumulative volume of pores model. **[0131]** Micropore and mesoporous analysis was performed by using the ASAP2460 from Micromeritics, USA. At a liquid nitrogen temperature, an equilibrium amount of nitrogen adsorbed on a surface of an object was related to characteristics such as a pore diameter, and in combination with the rule of change of an adsorption amount with relative pressure in an adsorption process, various models might be fit to calculate the pore diameter. A report generated by software used a Density Functional Theory (DFT) method to calculate pore diameter distribution, a total pore volume, and a pore volume within a certain range.

(6) Method for testing average pore diameter of pores of material:

A proper amount of sample particles are taken, the apertures of pores are measured under a Transmission Electron Microscope (TEM).

(7) Method for testing mass content of carbon element in anode material:

A G4 ICARUS HF infrared carbon sulfur analyzer from Bruker, German was used; a sample was burned at a high temperature in an oxygen-enriched state, and carbon and sulfur contained in the sample were respectively oxidized into carbon dioxide and sulfur dioxide; the generated gases entered an infrared detector with a carrier gas; and quantitative statistics was performed on changes in a carbon dioxide signal and sulfur dioxide signal, and contents of the carbon element and the sulfur element can be calculated, respectively.

(8) Method for testing mass content of silicon element in anode material:

An SA2-9-17TP box atmosphere furnace from Nanyang Xinyu was used; burning was performed under an oxygen atmosphere; silicon and silicon oxide in the sample were reacted to become silica; and carbon was burned and discharged as carbon dioxide, and the silicon content was calculated through weighing.

(9) Test for compaction density of anode material:

A CARVER 4350.22 powder compaction density tester from MYCRO, USA was used, a sample with specific mass m was placed in a die, a 1.0 T pressure was applied, the pressure was removed after being held for 30 s, a thickness was tested, and a compaction density was obtained through calculation.

(10) Method for particle size of anode material:

D50 was tested by using a laser particle analyzer, and there was a symmetric distribution similar to a normal distribution. In a volume reference distribution, a cumulative 50% diameter was D50, and so on, a cumulative 90% diameter was D90, and a cumulative 10% diameter was D10.

Test results:

Table 2

| | First precursor | | Carbon matrix | | Anode material | | | | |
|---|---|---|---|---|---|---|---|---|---|
| | Mass content of oxygen (%) | Mass content of nitrogen (%) | Mass content of oxygen (%) | Mass content of nitrogen (%) | Mass content of oxygen (%) | Mass content of nitrogen (%) | Powder conductivity (S/cm) | M | Existence form of oxygen and nitrogen in anode material |
| Example 1 | 12.2 | 4.3 | 3.6 | 2.1 | 1.9 | 1.2 | 0.30 | 5.0 | O-C, O-Si, Si-N, C-N |
| Example 2 | 6.4 | 5.6 | 2.8 | 2.4 | 1.7 | 1.5 | 0.38 | 4.20 | O-C, O-Si, Si-N, C-N |
| Example 3 | 4.2 | 7.3 | 2.1 | 3.6 | 1.5 | 1.9 | 0.53 | 3.19 | O-C, O-Si, Si-N, C-N |
| Example 4 | 4.6 | 4.7 | 2.4 | 2.0 | 1.3 | 1.1 | 4.5 | 0.27 | O-C, O-Si, Si-N, C-N |
| Example 5 | 3.2 | 3.1 | 1.9 | 1.4 | 0.9 | 0.8 | 9.6 | 0.09 | O-C, O-Si, Si-N, C-N |
| Example 6 | 4.2 | 7.2 | 2.0 | 3.3 | 1.4 | 1.8 | 0.63 | 2.52 | O-C, O-Si, Si-N, C-N |
| Example 7 | 4.3 | 7.3 | 1.9 | 3.1 | 1.3 | 1.5 | 1.3 | 1.07 | O-C, O-Si, Si-N, C-N |
| Example 8 | 6.5 | 5.7 | 1.4 | 1.2 | 0.6 | 0.5 | 6.5 | 0.08 | O-C, O-Si, Si-N, C-N |
| Example 9 | 6.3 | 5.6 | 0.8 | 0.4 | 0.3 | 0.2 | 1.6 | 0.15 | O-C, O-Si, Si-N, C-N |
| Example 10 | 6.3 | 5.7 | 2.7 | 2.3 | 1.6 | 1.4 | 0.37 | 4.05 | O-C, O-Si, Si-N, C-N |
| Comparative example 1 | 6.4 | 5.7 | 5.8 | 5.2 | 3.2 | 2.9 | 0.04 | 76.16 | O-C, O-Si, Si-N, C-N |
| Comparative example 2 | 25 | 18 | 23 | 16 | 12 | 9 | 0.11 | 94.48 | O-C, O-Si, Si-N, C-N |

Table 3

| Performance parameter / Sample | First discharging specific capacity (mAh/g) | ICE (%) | Capacity retention after 50 cycles (%) |
|---|---|---|---|
| Example 1 | 1903 | 90.1 | 88.7 |
| Example 2 | 1922 | 90.3 | 89.2 |
| Example 3 | 1954 | 90.6 | 89.8 |
| Example 4 | 1983 | 91.8 | 90.2 |
| Example 5 | 2089 | 93.1 | 92.4 |
| Example 6 | 1965 | 90.9 | 89.4 |
| Example 7 | 1964 | 91.2 | 90.4 |
| Example 8 | 2020 | 92.2 | 91.3 |
| Example 9 | 1987 | 90.7 | 89.8 |
| Example 10 | 1912 | 90.2 | 89.5 |
| Comparative example 1 | 1930 | 69.8 | 60.7 |
| Comparative example 2 | 1979 | 43.1 | 38.2 |

Test result analysis:

The specific experimental parameters of Examples 1-10 and the Comparative examples 1-2 were listed in Table 1, the testing parameters of the carbon matrix and anode material of Examples 1-10 and the Comparative examples 1-2 were listed in Table 2, and the performance parameters of the carbon matrix and anode material of Examples 1-10 and the Comparative examples 1-2 were listed in Table 3.

From the data of Examples 1-10 in Tables 1 and 2, it might be seen that, an increase in the temperature or an increase in the time for pre-carbonization, within an appropriate range, might reduce the mass contents of the nitrogen element and oxygen element in the first precursor obtained. Meanwhile, the carbonization treatment was performed on the first precursor in the subsequent reducing atmosphere, and when a reducing gas, such as hydrogen, was introduced into the reaction system, the nitrogen element and the oxygen element that were combined with the carbon were partially reduced to generate $N_2$ and $H_2O$ and released, and the mass contents of the nitrogen element and oxygen element in the anode material might also be reduced. That is, by controlling the carbonization temperature and time, and the pre-carbonization temperature and time, the nitrogen element and the oxygen elemnt that were in a non-conjugated system might be removed. In this way, the destruction of the conjugated system by the nitrogen element and the oxygen element in the non-conjugated system was reduced, such that the nitrogen and oxygen doping in the anode material obtained was controlled within a rational range. Therefore, the lone pair electrons on the p orbits of the nitrogen atoms and oxygen atoms might participate in the $\pi$-$\pi$ conjugated system of the carbon matrix to form the larger p-$\pi$ conjugated system, such that the number of mobile electrons in the carbon matrix was increased, thereby improving the powder conductivity of the anode material, and the relationship of the mass content A% of the oxygen element, the mass content B% of the nitrogen element, and the powder conductivity P of the anode material obtained in the present disclosure met $M = \frac{\sqrt{AB}}{P}$, M≤5. Combined with the data in Table 3, it might be seen that the lithium ion transmission efficiency might be maximized when the relationship of the mass content A% of the oxygen element, the mass content B% of the nitrogen element, and the powder conductivity P of the anode material met the above relationship. At the same time, the impact of nitrogen and oxygen doping on the initial coulombic efficiency of the anode material might be reduced, which caused the anode material to have both high initial coulombic efficiency and an excellent cycle capacity retention rate.

However, it was to be noted that, if the pre-carbonization or carbonization temperature was too high, it would result in the cracking of conjugated nitrogen and oxygen, leading to the damping of conductivity. Therefore, in order to obtain high conductive performance, the carbonization process was required to be controlled within a rational temperature range in the present disclosure.

Compared to Example 1, the temperature of the carbonization treatment for Comparative example 1 was too low to sufficiently reduce the oxygen and nitrogen contents in the carbon matrix, and the mass content of the nitrogen and oxygen in the anode material obtained after preparation was too high. Similarly, the mass contents of the nitrogen element and oxygen element contained in the mixture in Comparative example 2 were too high, and the mass contents of the nitrogen and oxygen in the finally prepared anode material were also too high, such that the relationship $M = \frac{\sqrt{AB}}{P}$ of the mass content A% of the oxygen element, the mass content B% of the nitrogen element, and the powder conductivity P in Comparative example 1 and Comparative example 2 did not meet M≤5, but met M > 5. At this time, the tetrahedral structures formed by the S and P electron orbits of excessive nitrogen and oxygen caused carbon in the anode material to deviate from a π-π conjugate plane, resulting in a decrease in π-π conjugated carbon. Moreover, groups such as C-O-O-C and C-N-N-C formed by nitrogen and oxygen atoms and carbon split the π-π conjugated system, further reducing the electronic conductivity of the anode material. The poor conductivity of the anode material caused the battery to form more solid-phase conductive interfaces during cycling, resulting in irreversible consumption of active lithium ions. That is, the number of lithium ions that could participate in deintercalation was reduced, thus leading to reduction in the initial coulombic efficiency of the battery.

Although the present disclosure is disclosed as above with preferred examples, it is not intended to limit the claims, and any of those skilled in the art may make a number of possible changes and modifications without departing from the conception of the present disclosure, and therefore the scope of protection of the present disclosure should be based on the scope defined in the claims of the present disclosure.

**Claims**

1. An anode material, comprising a carbon matrix and an active substance, wherein the anode material contains oxygen element and nitrogen element; and
a mass content of the oxygen element in the anode material is A%, a mass content of the nitrogen element in the anode material is B%, powder conductivity of the anode material is P S/cm, and A, B, and P meet the following relationship:

$$M = \frac{\sqrt{AB}}{P}, M \leq 5.$$

2. The anode material according to claim 1, having at least one of the following features:

   (1) the mass content of the oxygen element in the anode material is 0.2%-2%; and
   (2) the mass content of the nitrogen element in the anode material is 0.2%-2%.

3. The anode material according to claim 1, wherein the powder conductivity of the anode material is 0.3 S/cm-10 S/cm.

4. The anode material according to claim 1, wherein a volume median particle size D50 of the anode material is 8 μm-20 μm.

5. The anode material according to claim 1, wherein a specific surface area of the anode material is ≤100 m$^2$/g.

6. The anode material according to claim 1, wherein a compaction density of the anode material is 0.8 g/cm$^3$-1.2 g/cm$^3$.

7. The anode material according to claim 1, further having at least one of the following features:

   (1) the carbon matrix comprises at least one of amorphous carbon, graphitized carbon, mesocarbon microbeads, and carbon gel;
   (2) the carbon matrix comprises at least one of amorphous carbon, graphitized carbon, mesocarbon microbeads, and carbon gel, wherein the amorphous carbon comprises at least one of hard carbon, soft carbon, and activated carbon; and
   (3) the carbon matrix comprises at least one of amorphous carbon, graphitized carbon, mesocarbon microbeads, and carbon gel, wherein the graphitized carbon comprises at least one of graphite and a graphitized carbon nanotube.

8. The anode material according to claim 1, further having at least one of the following features:

(1) the carbon matrix has pores, and the active substance is at least partially distributed in the pores of the carbon matrix; and
(2) the carbon matrix has pores, and the pores comprise mesoporous and micropore.

9. The anode material according to claim 1, further having at least one of the following features:

(1) the active substance comprises a silicon-based active substance, and the silicon-based active substance comprises at least one of crystalline silicon, amorphous silicon, composite particles of crystal and amorphous silicon;
(2) the active substance comprises silicon-based active substance, and the active substance further comprises at least one of Sn, **P,** S, Ge, and Pb; and
(3) a shape of the active substance comprises at least one of a dot shape, a spherical shape, an ellipsoidal shape, and a flaky shape.

10. The anode material according to claim 1, wherein a surface of the anode material has a coating layer, and a material of the coating layer comprises at least one of a metal oxide, a carbon material, a conducting polymer, a fluoride, a phosphate, and a nitride.

11. The anode material according to claim 10, having at least one of the following features:

(1) the material of the coating layer comprises the metal oxide, and the metal oxide comprises at least one of oxides of Sn, Ge, Fe, Si, Cu, Ti, Na, Mg, Al, Ca, and Zn;
(2) the material of the coating layer comprises the conducting polymer, and the conducting polymer comprises at least one of polyaniline, polyacetylene, polypyrrole, polythiophene, poly(3-hexylthiophene), poly-phenylenevinylene, polypyridine, and polyphenylene vinylene;
(3) the material of the coating layer comprises the fluoride, and the fluoride comprises at least one of polyvinyl fluoride, fluoropolymer, sodium fluoride, potassium fluoride, fluorocarbon polymer, fluorosilicone polymer, hexafluorobutyl acrylate, poly(tetrafluoroethylene), fluorinated ethylene propylene copolymer, perfluoroalkoxy resin, polychlorotrifluoroethylene, ethylene chlorotrifluoroethylene copolymer, polyvinylidene fluoride, and polyvinyl fluoride;
(4) the material of the coating layer comprises the phosphate, and the phosphate comprises at least one of magnesium phosphate, calcium phosphate, aluminum phosphate, titanium phosphate, chromium phosphate, cobalt phosphate, nickel phosphate, germanium phosphate, zirconium phosphate, niobium phosphate, molybdenum phosphate, tantalum phosphate, tungsten phosphate, and lanthanum phosphate;
(5) the material of the coating layer comprises the nitride, and the nitride comprises at least one of titanium nitride, vanadium nitride, cobalt nitride, nickel nitride, and carbon nitride; and
(6) the material of the coating layer comprises the carbon material, and the carbon material comprises at least one of amorphous carbon and graphitized carbon.

12. The anode material according to claim 10, wherein a thickness of the coating layer is 1 nm-300 nm.

13. The anode material according to claim 10, wherein a mass proportion of the coating layer in the anode material is ≤10%.

14. A battery, comprising the anode material according to any one of claims 1 to 13.

Fig. 1

Fig. 2

Fig. 3

Fig. 4

| |
|---|
| Mix an oxygen-containing carbon source precursor and a nitrogen dopant to obtain a mixture, and perform a pre-carbonization treatment on the mixture to obtain a first precursor, where a mass proportion of oxygen element in the mixture is 10%-50%, and a mass proportion of nitrogen element is 5%-20% |

S10

| |
|---|
| Perform a carbonization treatment on the first precursor under a reducing atmosphere, so as to obtain a carbon matrix, where a temperature for the carbonization treatment is 800 °C-1000 °C |

S20

| |
|---|
| Compound an active substance and the carbon matrix to obtain a compound product, where a anode material includes the compound product |

S30

## INTERNATIONAL SEARCH REPORT

| International application No. |
|---|
| **PCT/CN2024/124537** |

**A. CLASSIFICATION OF SUBJECT MATTER**

H01M 4/38(2006.01)i; H01M4/36(2006.01)i

According to International Patent Classification (IPC) or to both national classification and IPC

**B. FIELDS SEARCHED**

Minimum documentation searched (classification system followed by classification symbols)

IPC:H01M 4

Documentation searched other than minimum documentation to the extent that such documents are included in the fields searched

Electronic data base consulted during the international search (name of data base and, where practicable, search terms used)

CNTXT, VCN, ENTXT, VEN, CJFD: 负极, 氮, 氧, 含量, 质量, 电导率, 淀粉, 苯胺, 碳化, 库伦效率, 循环, 活性物质, 硅, conductivity, negative electrode material, oxygen element, nitrogen element

**C. DOCUMENTS CONSIDERED TO BE RELEVANT**

| Category* | Citation of document, with indication, where appropriate, of the relevant passages | Relevant to claim No. |
|---|---|---|
| PX | CN 118073558 A (BTR NEW MATERIAL GROUP CO., LTD.) 24 May 2024 (2024-05-24) description, paragraphs 4-60 | 1-14 |
| Y | CN 116632221 A (SHENZHEN HITHIUM ENERGY STORAGE CONTROL TECHNOLOGY CO., LTD. et al.) 22 August 2023 (2023-08-22) description, embodiment 1, and table 2 | 1, 4-14 |
| A | CN 116632221 A (SHENZHEN HITHIUM ENERGY STORAGE CONTROL TECHNOLOGY CO., LTD. et al.) 22 August 2023 (2023-08-22) description, embodiment 1, and table 2 | 2-3 |
| Y | CN 117423823 A (BTR NEW MATERIAL GROUP CO., LTD.) 19 January 2024 (2024-01-19) description, paragraphs 86-100 | 1, 4-14 |
| A | CN 117423823 A (BTR NEW MATERIAL GROUP CO., LTD.) 19 January 2024 (2024-01-19) description, paragraphs 86-100 | 2-3 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **28 November 2024** | **31 December 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/124537**

| C. | DOCUMENTS CONSIDERED TO BE RELEVANT | |
|---|---|---|
| Category* | Citation of document, with indication, where appropriate, of the relevant passages | Relevant to claim No. |
| A | CN 117476921 A (BTR NEW MATERIAL GROUP CO., LTD. et al.) 30 January 2024 (2024-01-30) entire document | 1-14 |
| A | WO 2022193123 A1 (NINGDE AMPEREX TECHNOLOGY LTD.) 22 September 2022 (2022-09-22) entire document | 1-14 |

Form PCT/ISA/210 (second sheet) (July 2022)

**INTERNATIONAL SEARCH REPORT**
Information on patent family members

International application No.

**PCT/CN2024/124537**

| Patent document cited in search report | | | Publication date (day/month/year) | Patent family member(s) | | | Publication date (day/month/year) |
|---|---|---|---|---|---|---|---|
| CN | 118073558 | A | 24 May 2024 | None | | | |
| CN | 116632221 | A | 22 August 2023 | CN | 116632221 | B | 09 February 2024 |
| CN | 117423823 | A | 19 January 2024 | None | | | |
| CN | 117476921 | A | 30 January 2024 | None | | | |
| WO | 2022193123 | A1 | 22 September 2022 | CN | 114051663 | A | 15 February 2022 |
| | | | | CN | 114051663 | B | 21 June 2024 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410297451X